# EUROPEAN PATENT APPLICATION

(11) **EP 1 298 953 A2**
(43) Date of publication of application: **02.04.2003**
(21) Application number: 02256453.8
(22) Date of filing: 17.09.2002
(51) Int. Cl.: H04Q 7/38

(54) **Radio base station apparatus, computer program and a method of setting a connection between a radio base station apparatus and a radio terminal**

(30) Priority: 26.09.2001 JP 2001295110
(71) Applicant: Kabushiki Kaisha Toshiba, Tokyo 105-8001 (JP)
(72) Inventor: Yamato, Katsumi, c/o Intellectual Prop. Division, Minato-ku, Tokyo 105-8001 (JP); Sakamoto, Takafumi, c/o Intellectual Prop. Div., Minato-ku, Ttokyo 105-8001 (JP)
(74) Representative: Granleese, Rhian Jane

(57) **Abstract**

A radio base station apparatus which sets a connection in respect to one radio terminal (3) of a plurality of radio terminals each having a first identifier which is assigned in response to a connection setting request from the one radio terminal (3). The radio base station apparatus comprises a storage unit (121) configured to store a table associating the first identifier with a second identifier temporarily assigned to at least the one radio terminal (3), and a connection control unit (12, 14) configured to determine whether or not the second identifier corresponding to the first identifier notified by the one radio terminal (3) remains in the table without being released in response to the connection setting request and to control the connection in accordance with a determination result.

## Description

The present invention relates to a radio base station apparatus for performing packet communication with a radio terminal apparatus, and a memory storing a program code.

According to a standard called HYPERLAN Type 2 (High Performance Radio Local Area Network Type 2), Radio Link Control Sublayer (RLC Sublayer), which is a part of Data Link Control Layer (DLC Layer), controls setting of a connection between a radio base station apparatus and a radio terminal apparatus and release of the connection. In the DLC Layer, an identifier for uniquely specifying the connection is used for identification of the connection. This identifier is called "mac-id". When setting the connection between the radio base station apparatus and the radio terminal apparatus, the RLC Sublayer in the radio base station apparatus assigns a mac-id to the connection.

In HYPERLAN Type 2, when packet communication is performed between the radio base station apparatus and the radio terminal apparatus, Convergence Layer (CL), which is an upper layer of the DLC Layer, converts a packet (to be transmitted) to a packet format used on the radio line and delivers the converted packet to the DLC Layer. In this case, the CL assigns the mac-id, which has been assigned to the connection, to the packet so as to specify the connection that is associated with the packet. For this purpose, the CL associates the destination address and the mac-id.

In the description below, assume a case where an Ethernet (TM) frame is sent from the radio base station apparatus to the radio terminal apparatus. For distinction from the Ethernet frame, the packet treated in the DLC Layer is called "DLC packet".

When a connection setting request has been issued from the radio terminal apparatus to the radio base station apparatus, the RLC Sublayer in the radio base station apparatus determines a mac-id to be assigned to the radio terminal apparatus and informs the radio terminal apparatus of the assigned mac-id. In the radio base station apparatus, the CL is informed of a MAC address of the radio terminal apparatus, which has been reported from the radio terminal apparatus at the time of the connection setting request, and the mac-id assigned to the radio terminal apparatus. The CL holds the correspondency between the MAC address and the mac-id. The MAC address is a 48-bit address set by IEEE802 Standard. Since this correspondency is managed by the CL in the radio base station apparatus, the DLC Layer can perform a DLC packet transmission/reception process, simply by referring to the mac-id of the radio terminal apparatus, without paying attention to the MAC address of the radio terminal apparatus.

When a connection release request has been issued from the radio terminal apparatus to the radio base station apparatus, the RLC Sublayer in the radio base station apparatus releases the mac-id assigned to the radio terminal apparatus, stops communication using the released mac-id, and causes the CL to clear the correspondency between the mac-id and MAC address.

In some cases, radio communication between the radio base station apparatus and the radio terminal apparatus may suddenly be disabled due to, e.g. deterioration of the quality of the radio link or movement of the radio terminal apparatus out of the area of the radio base station apparatus. To cope with this, the following procedure is prepared in the RLC Sublayer.

In order to enable determination as to whether communication between the radio base station apparatus and the radio terminal apparatus can be continued, the radio terminal periodically transmits to the radio base station apparatus an RLC_MT_ALIVE message that is control information indicating that the radio terminal apparatus is in the communicable state. If the radio base station apparatus receives this RLC_MT_ALIVE message, the radio base station apparatus recognizes that it can communicate with the radio terminal apparatus that has transmitted this message. Then, the radio base station apparatus returns to the radio terminal apparatus a RLC_MT_ALIVE_ACK message that is control information indicating a response to the message. The radio terminal apparatus that has received the RLC_MT_ALIVE_ACK message recognizes that the radio terminal apparatus can communicate with the radio base station apparatus since it has received a response to the RLC_MT_ALIVE message transmitted from the radio terminal apparatus.

On the other hand, if the radio terminal apparatus has not received the RLC_MT_ALIVE_ACK message in response to the RLC_MT_ALIVE message transmitted from the radio terminal apparatus for a predetermined time period, the radio terminal apparatus recognizes that it cannot communicate with the radio base station apparatus. Then, the radio terminal apparatus issues no notice to the radio base station apparatus, performs a connection release process for releasing the connection with the radio base station apparatus, and releases the mac-id assigned to the radio terminal apparatus.

In addition, if the radio base station apparatus is unable to receive the RLC_MT_ALIVE message, which is periodically sent from the radio terminal apparatus, within a predetermined time period after the last reception thereof, the radio base station apparatus sends to the radio terminal apparatus an RLC_MT_ALIVE_ REQUEST message that is control information requesting transmission of the RLC_MT_ALIVE message. When the radio base station apparatus has not received from the radio terminal apparatus an RLC_MT_ALIVE_REQUEST_ACK message that is control information in response to the RLC_MT_ALIVE_REQUEST message, the radio base station apparatus first recognizes that the radio terminal apparatus has released the connection. Thus, the radio base station apparatus performs a connection release process for releasing the connection with the radio terminal apparatus and releases the mac-id assigned to the radio terminal apparatus.

When the radio terminal apparatus has received the RLC_MT_ALIVE_REQUEST message before releasing the mac-id, the mac-id may be retained, in some cases, by performing the following procedure. To begin with, the radio terminal apparatus transmits the RLC_MT_ALIVE REQUEST_ACK message, and the radio base station apparatus receives this RLC_MT_ALIVE_REQUEST_ACK message. Then, the radio terminal apparatus transmits the RLC_MT_ALIVE message, and the radio base station apparatus receives this RLC_MT_ALIVE message. The radio base station apparatus that has received this RLC MT_ALIVE message transmits the RLC_MT_ALIVE_ACK message, and the radio terminal apparatus receives this RLC_MT_ALIVE_ACK message.

The above operations for setting a connection and releasing the connection are common to the case of performing communications according to ARIB STD-T70, or standard specifications in radio-related industries, which is called HiSWANa (High Speed Wireless Access Network type a).

As stated above, when the radio terminal apparatus is unable to receive the RLC_MT_ALIVE_ACK message, it issues no notice to the radio base station apparatus and releases the connection with the radio base station apparatus and the mac-id. In this case, the passing of a predetermined time period is needed until the radio base station apparatus releases the connection and mac-id. In short, until this predetermined time period has passed, a contradiction occurs with respect to the mac-id between the radio base station apparatus and the radio terminal apparatus. This contradiction causes the following problem.

In the case where the radio terminal apparatus, which did not receive the RLC_MT_ALIVE_ACK message and has released the connection without notice to the radio base station apparatus, issues a connection setting request to the radio base station apparatus once again, the RLC Sublayer of the radio base station apparatus does not manage the MAC address of the radio terminal apparatus. Consequently, the radio base station apparatus cannot determine whether this connection setting request has come from the radio terminal apparatus to which the mac-id has already been assigned. If in response to the connection setting request the RLC Sublayer doubly assigns another mac-id to the radio terminal apparatus to which the mac-id has already been assigned and the RLC Sublayer informs the CL of this other assigned mac-id, a contradiction regarding the radio terminal apparatus occurs since the CL already holds the correspondency between the MAC address and mac-id of the radio terminal apparatus. However, a solution to this problem is not indicated in HYPERLAN Type 2.

The same problem occurs in the case of communications according to ARIB STD-T70.

It is an object of the present invention to provide a radio base station apparatus and a memory storing a program code therefor, which can prevent a contradiction in the base station regarding temporary identification information assigned to a radio terminal apparatus, such a contradiction occurring when the radio base station apparatus releases a connection with the radio terminal apparatus.

According to a first aspect of the invention, there is provided a radio base station apparatus setting a connection in respect to one radio terminal of a plurality of radio terminals each having a first identifier which is assigned in response to a connection setting request from the one radio terminal, the radio base station apparatus comprising a storage unit stores a table associating the first identifier with a second identifier temporarily assigned to at least the one radio terminal. A connection control unit determines whether or not the second identifier corresponding to the first identifier notified by the one radio terminal remains in the table without being released in response to the connection setting request and to control the connection in accordance with a determination result.

According to a second aspect of the invention, there is provided a computer-executable program recorded on a computer-readable medium for setting a connection between a radio base station apparatus and one radio terminal of a plurality of radio terminals each having a first identifier which is assigned in response to a connection setting request from the one radio terminal, the program including means for instructing a computer to store a table in a storage unit, the table associating the first identifier with a second identifier temporarily assigned to at least the one radio terminal;
means for instructing the computer to determine whether or not the second identifier corresponding to the first identifier notified by the one radio terminal remains in the table without being released in response to the connection setting request and to control the connection in accordance with a determination result.

According to a third aspect of the invention, there is provided a method of setting a connection between a radio base station apparatus and one radio terminal of a plurality of radio terminals each having a first identifier which is assigned in response to a connection setting request from the one radio terminal, the method comprising: storing a table in a storage unit, the table associating the first identifier with a second identifier temporarily assigned to at least the one radio terminal; determining whether or not the second identifier corresponding to the first identifier notified by the one radio terminal remains in the table without being released in response to the connection setting request; and controlling the connection in accordance with a determination result.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an example of a radio communication system including a radio base station apparatus according to an embodiment of the present invention and a radio terminal apparatus;
FIG. 2 shows an example of the structure of the radio base station apparatus according to the embodiment;
FIG. 3 shows an example of the structure of the radio terminal apparatus according to the embodiment;
FIG. 4 is a view for describing an example of correspondency between a MAC address and a mac-id at a time when a connection has been set between the radio base station apparatus and the radio terminal apparatus;
FIG. 5 is a view for describing an example of correspondency between a MAC address and a mac-id at a time when the connection has been released without notice from the radio terminal apparatus to the radio base station apparatus;
FIG. 6 shows a first example of a sequence at the time of setting the connection according to the embodiment;
FIG. 7 shows a first example of a procedure of assigning a mac-id in the radio base station apparatus according to the embodiment;
FIG. 8 shows a second example of the sequence at the time of setting the connection according to the embodiment;
FIG. 9 shows a second example of the procedure of assigning the mac-id in the radio base station apparatus according to the embodiment;
FIG. 10 shows a third example of the sequence at the time of setting the connection according to the embodiment;
FIG. 11 shows a third example of the procedure of assigning the mac-id in the radio base station apparatus according to the embodiment; and
FIG. 12 illustrates an outline of a protocol stack in the radio base station apparatus and the radio terminal apparatus constituting the radio communication system according to the embodiment.

An embodiment of the present invention will now be described with reference to the accompanying drawings.

In this embodiment, a radio base station apparatus and a radio terminal apparatus, which are based on HYPERLAN Type 2, will be described by way of example.

In addition, in this embodiment, it is assumed that an Ethernet frame is sent from the radio base station apparatus to the radio terminal apparatus.

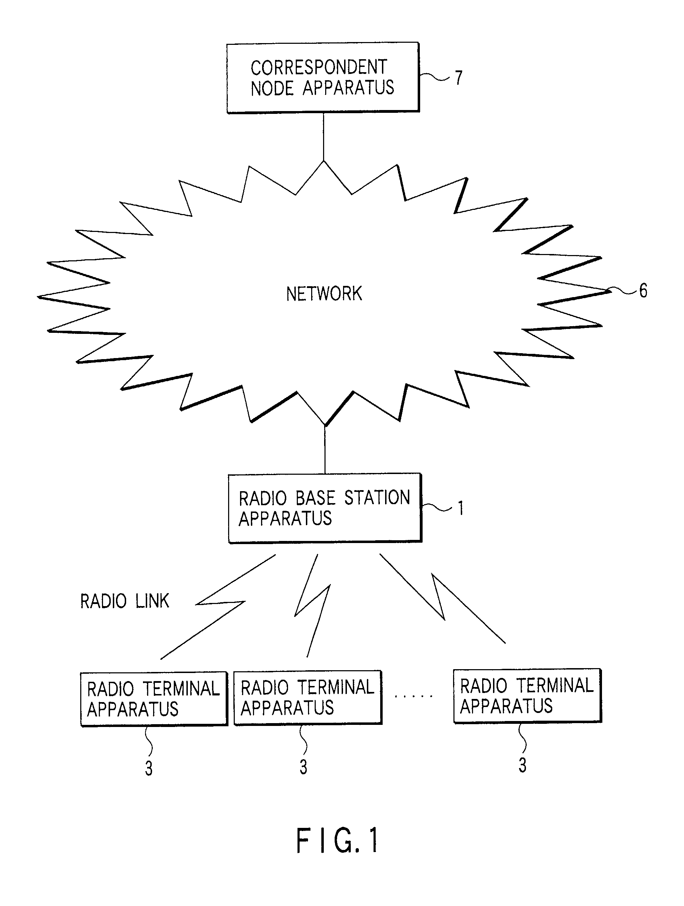

FIG. 1 shows an example of a radio communication system including the radio base station apparatus and the radio terminal apparatus according to the embodiment. As is shown in FIG. 1, a radio base station apparatus 1 can communicate with a plurality of radio terminal apparatus via radio links.

FIG. 1 shows an example of application of the present radio communication system. This example relates to a network system wherein the radio base station apparatus 1 is connected to a predetermined network 6, and the radio terminal apparatus 3 is communicable with a correspondent node apparatus 7 via the network 6, radio base station apparatus 1 and radio link. The network 6 is, for instance, the Internet or a communication service provider's network. The correspondent node apparatus 7 is, for instance, a WEB server.

FIG. 1 shows only one radio base station apparatus 1, but a plurality of radio base station apparatuses 1 may be employed. Where plural radio base station apparatuses 1 are present, each radio terminal apparatus 3 is connected to any one of the radio base station apparatuses 1, which is selected according to the current position, etc. of the radio terminal apparatus 3.

FIG. 1 illustrates an example of a mode wherein the radio terminal apparatus 3 is communicable with the correspondent node apparatus 7. Alternatively and additionally, the radio terminal apparatus 3 may be made communicable with another terminal device via one or more radio base station apparatuses 1 (or one or more radio base station apparatuses 1 and network 6).

Needless to say, the radio communication system including the radio base station apparatus and the radio terminal apparatus according to the embodiment is not limited the above-described modes, and other various applications can be made.

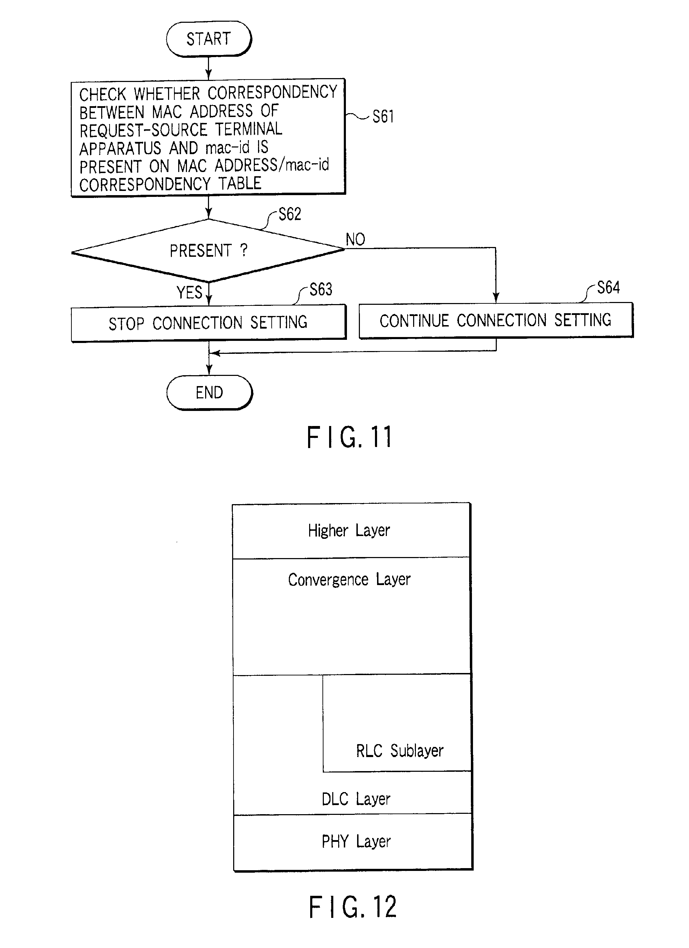

FIG. 12 shows an outline of a protocol stack in the radio base station apparatus and the radio terminal apparatus of the radio communication system according to the embodiment. The protocol stack shown in FIG. 12 comprises four layers: Higher Layer, CL, DLC Layer, and Physical Layer (PHY Layer). RLC Sublayer is provided as part of the DLC Layer.

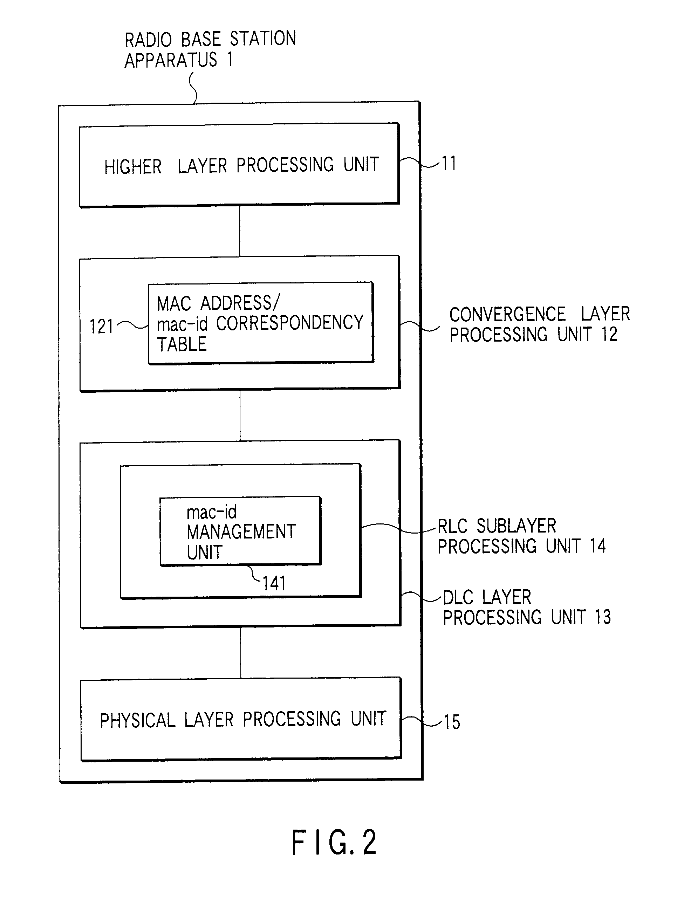

FIG. 2 shows an example of the structure of the radio base station apparatus according to the embodiment.

The radio base station apparatus 1 is basically configured to have processing units corresponding to the protocol stack shown in FIG. 12. As is shown in FIG. 2, the radio base station apparatus 1 comprises a Higher Layer processing unit 11, a CL processing unit 12, a DLC Layer processing unit 13 and a PHY Layer processing unit 15. The DLC Layer processing unit 13 includes an RLC Sublayer processing unit 14. The RLC Sublayer processing unit 14 includes a mac-id management unit 141. The CL processing unit 12 includes a MAC address/mac-id correspondency table 121. FIG. 2 shows mainly the portion of the structure of radio base station apparatus 1, which corresponds to the protocol stack. Where necessary, the radio base station apparatus 1 may have other functions or devices.

The Higher Layer processing unit 11 performs a protocol process located higher than the CL processing unit 12. The Higher Layer processing unit 11 performs data transfer of Ethernet frames with the CL processing unit 12. The CL processing unit 12 performs a process of converting an Ethernet frame to a plurality of DLC packets, and a process of inversely converting a plurality of DLC packets to the original Ethernet frame. The CL processing unit 12 performs data transfer of DLC packets with the DLC Layer processing unit 13. The DLC Layer processing unit 13 performs a process of transmitting/receiving DLC packets and control information. The PHY Layer processing unit 15 performs radio-related processes.

The RLC Sublayer processing unit 14 is provided as part of the DLC Layer processing unit 13. The RLC Sublayer processing unit 14 performs management of radio resources, and also management of an identifier mac-id for uniquely identifying the connection. In FIG. 2, the mac-id management unit 141 is shown as a function for managing the mac-id in the RLC Sublayer processing unit 14.

The CL processing unit 12 has the MAC address/mac-id correspondency table 121 for storing the correspondency between the MAC address of the communication counterpart radio terminal apparatus and the mac-id.

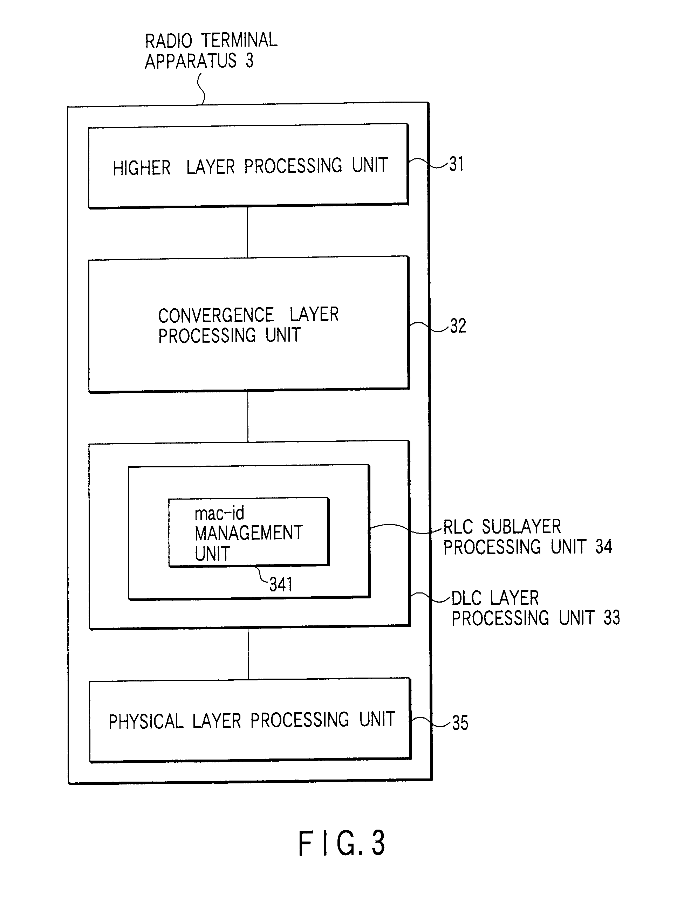

FIG. 3 shows an example of the structure of the radio terminal apparatus according to the embodiment.

The radio terminal apparatus 3, like the radio base station apparatus 1, is basically configured to have processing units corresponding to the protocol stack shown in FIG. 12. As is shown in FIG. 3, the radio terminal apparatus 3 comprises a Higher Layer processing unit 31, a CL processing unit 32, a DLC Layer processing unit 33 and a PHY Layer processing unit 35. The DLC Layer processing unit 33 includes an RLC Sublayer processing unit 34. The RLC Sublayer processing unit 34 includes a mac-id management unit 341. In this fashion, the radio terminal apparatus 3 may have basically the same structure as the prior art with respect to the communication from the radio base station apparatus 1 to radio terminal apparatus 3. FIG. 3 shows mainly the portion of the structure of radio terminal apparatus 3, which corresponds to the protocol stack. Where necessary, the radio terminal apparatus 3 may have other functions or devices.

For the communication from the radio base station apparatus 1 to radio terminal apparatus 3, the radio terminal apparatus 3 may, or may not, be provided with the MAC address/mac-id correspondency table 121 in the CL processing unit 32.

The operation of the present embodiment will now be described.

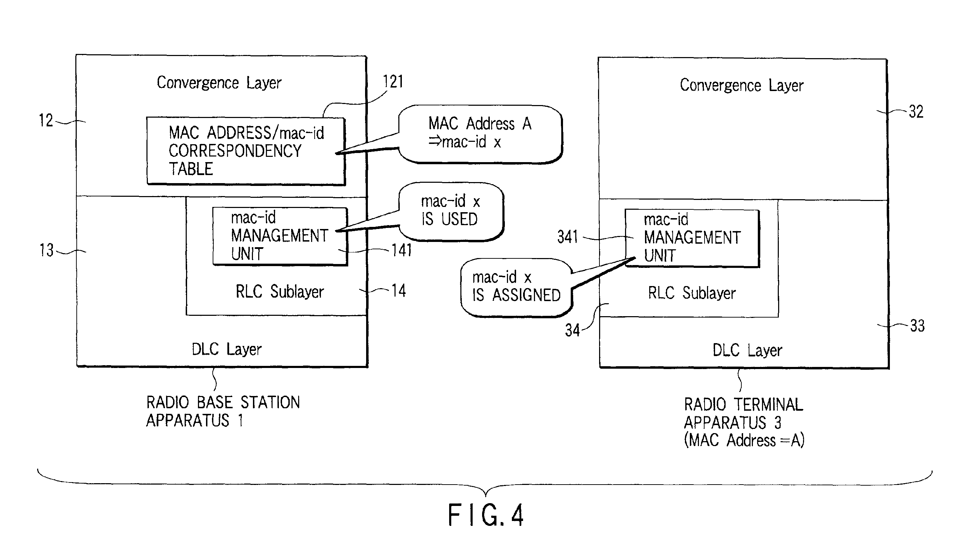

FIG. 4 shows an example of correspondency between a MAC address and a mac-id at the time when a connection is established between the radio base station apparatus 1 and the radio terminal apparatus 3 having a MAC address "A".

In this example, a mac-id = x is assigned to the connection with the radio terminal apparatus 3 in the mac-id management unit 141. In addition, the MAC address "A" of radio terminal apparatus 3 is associated with mac-id "x" in the MAC address/mac-id correspondency table 121 in the radio base station apparatus 1. Subsequently, in the radio base station apparatus 1, the mac-id "x" is given to an Ethernet frame in which "A" is described as its destination address, that is, the MAC address of radio terminal apparatus 3.

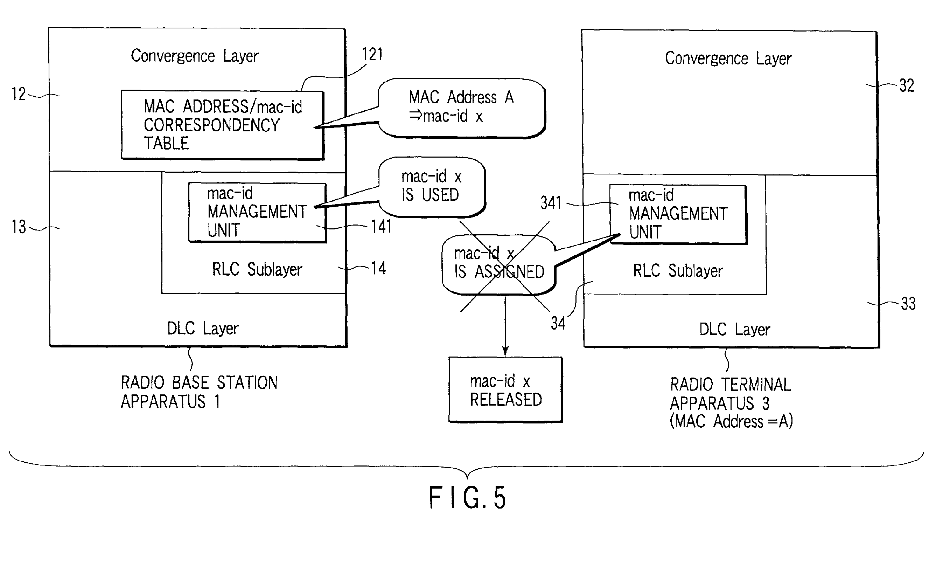

Assume that communication between the radio base station apparatus 1 and the radio terminal apparatus 3 was disabled and the radio terminal apparatus 3 failed to receive an RLC_MT_ALIVE_ACK message from the radio base station apparatus 1 in response to an RLC_MT_ALIVE message sent from the radio terminal apparatus 3 itself. In this case, the radio terminal apparatus 3 executes a connection release process without notice to the radio base station apparatus 1, and the mac-id management unit 341 of radio terminal apparatus 3 releases the mac-id "x", as shown in FIG. 5.

On the other hand, the radio base station apparatus 1, in the state shown in FIG. 5, sends to the radio terminal apparatus 3 an RLC_MT_ALIVE_REQUEST message that requests sending of an RLC_MT_ALIVE message after a predetermined time period has passed. If the radio base station apparatus 1 fails to receive a response, i.e. an RLC_MT_ALIVE_REQUEST_ACK message, from the radio terminal apparatus 3, the radio base station apparatus 1 releases the mac-id "x" assigned to the radio terminal apparatus 3.

In this embodiment, if the radio base station apparatus 1 receives a connection setting request from the radio terminal apparatus 3 before executing the above-described mac-id release process, the radio base station apparatus 1 performs a mac-id assignment process, according to methods described below, so as to avoid contradiction between the radio base station apparatus 1 and the radio terminal apparatus 3.

A description will now be given of some examples of control sequences between the radio base station apparatus 1 and the radio terminal apparatus 3 and the mac-id assignment process in the radio base station apparatus.

### (First Example)

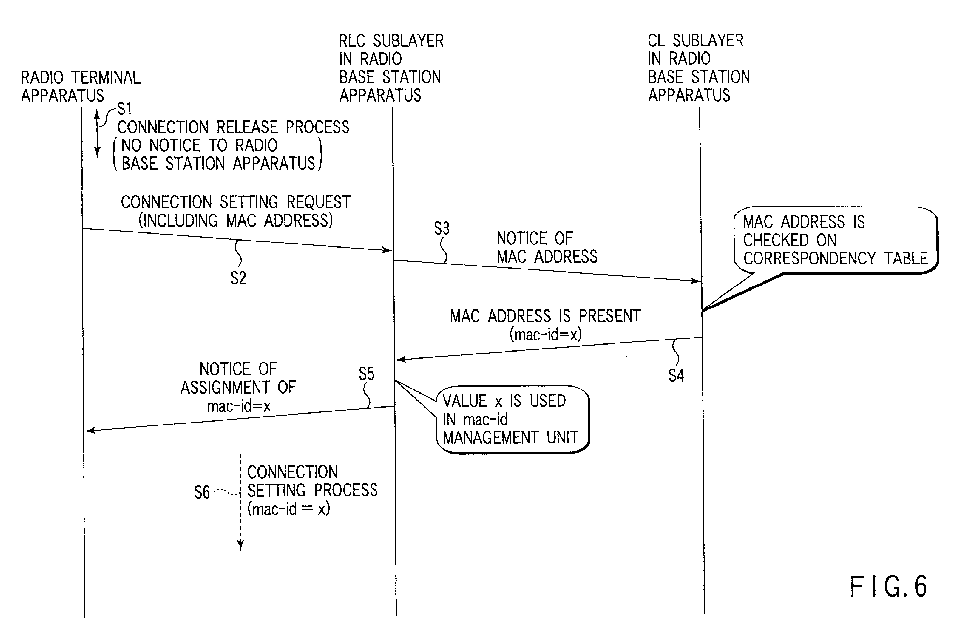

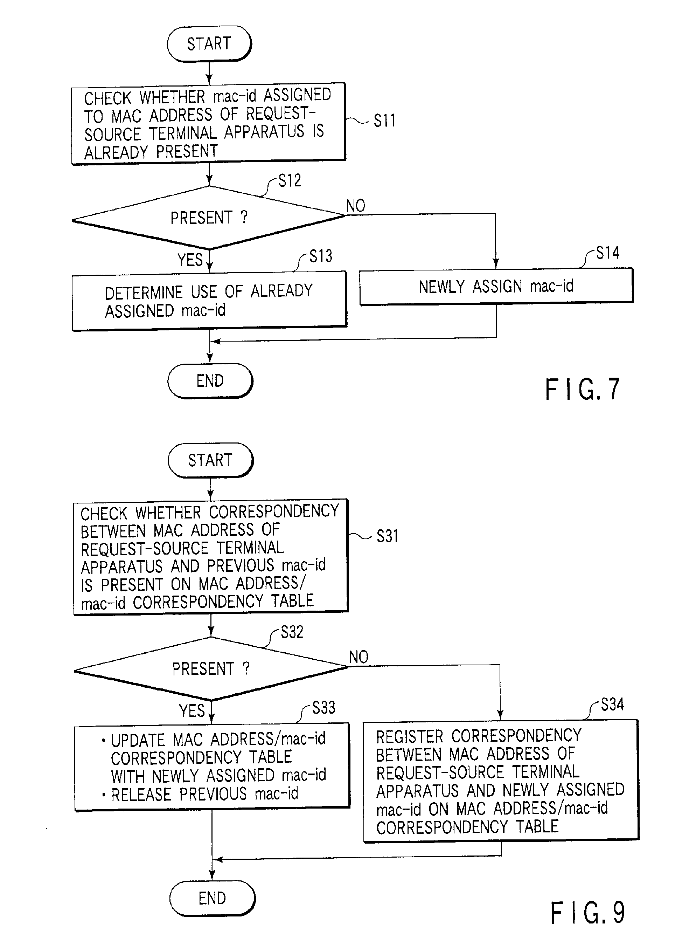

FIG. 6 shows a first example of a sequence of a connection setting in the present embodiment. FIG. 7 shows a first example of the mac-id assignment process in the radio base station apparatus 1 in the embodiment.

In the first example, a MAC address of the radio terminal apparatus is included in a connection setting request message from the radio terminal apparatus 3 to the radio base station apparatus 1.

In this method, when the radio base station apparatus 1 has received a connection setting request message from the radio terminal apparatus 3, the radio base station apparatus 1 does not immediately execute a mac-id assignment process, but first checks whether the mac-id assigned to the MAC address of the radio terminal apparatus 3 (i.e. the source of the request) already exists, by referring to the MAC address/mac-id correspondency table 121 in the CL (step S11). If not (NO in S12), a new mac-id is assigned (S14) and a procedure for the connection setting request is carried out. If the mac-id exists (YES in step 12), the use of the already assigned mac-id is determined (S13) and a procedure for the connection setting request is carried out.

This example will now be described with reference to FIG. 6.

Assume that the radio terminal apparatus 3 has executed a connection release process for the mac-id = "x", without notice to the radio base station apparatus 1 (S1).

If the radio base station apparatus 1 receives a connection setting request from the radio terminal apparatus 3 before the radio base station apparatus 1 executes a connection release process for the mac-id = "x" (S2), the RLC Sublayer processing unit 14 of radio base station apparatus 1 informs the CL processing unit 12 of radio base station apparatus 1 of the MAC address of the radio terminal apparatus 3 which is described in the received connection setting request (S3). The CL processing unit 12 of radio base station apparatus 1 refers to the MAC address/mac-id correspondency table 121 and checks whether the mac-id value has already been assigned to the MAC address.

In the state shown in FIG. 5, for example, the mac-id = "x" has not yet been released and is still assigned. Thus, the CL processing unit 12 of radio base station apparatus 1 informs the RLC Sublayer processing unit 14 of radio base station apparatus 1 that the mac-id = "x" is assigned (S4).

The RLC Sublayer processing unit 14 that has thus been informed starts the connection setting process so as to assign the mac-id = "x" to the radio terminal apparatus 3 (S5, S6).

In this case, the connection for the mac-id = "x" is already established in the radio base station apparatus 1 (but, in fact, the communication using this connection is disabled since the communication counterpart radio terminal apparatus 3 has released the connection). Thus, if the radio base station apparatus 1 receives a message relating to the connection setting process from the radio terminal apparatus 3, the radio base station apparatus 1 generates only a response message according to the connection setting process procedure and sends this message to the radio terminal apparatus 3.

On the other hand, if the CL processing unit 12 of radio base station apparatus 1 refers to the MAC address/mac-id correspondency table 121 and determines that the mac-id value has not been assigned to the MAC address, the CL processing unit 12 informs the RLC Sublayer processing unit 14 to that effect. The informed RLC Sublayer processing unit 14 starts an ordinary connection setting process.

### (Second Example)

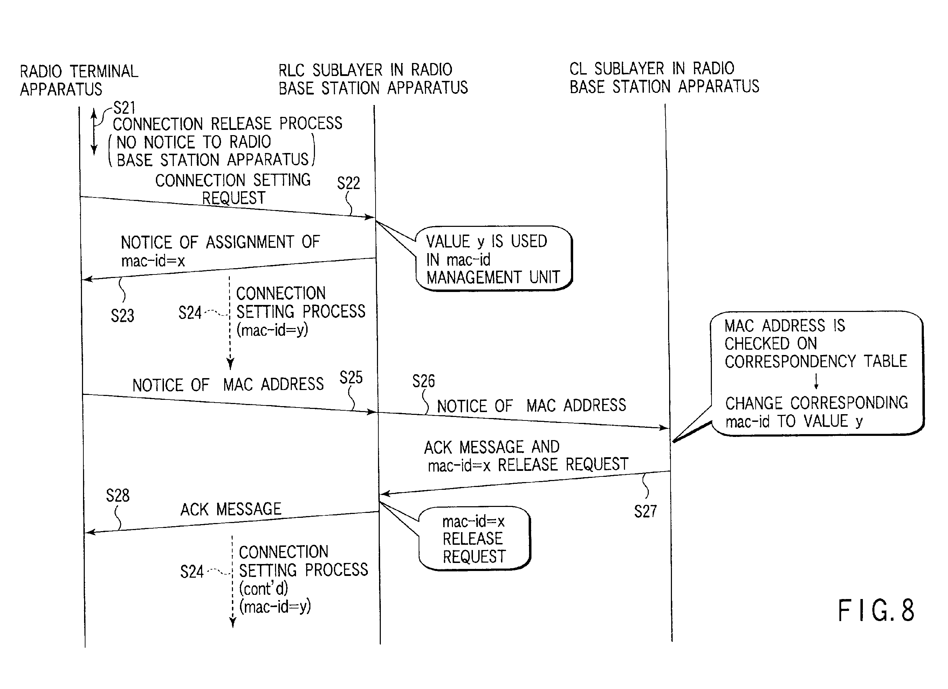

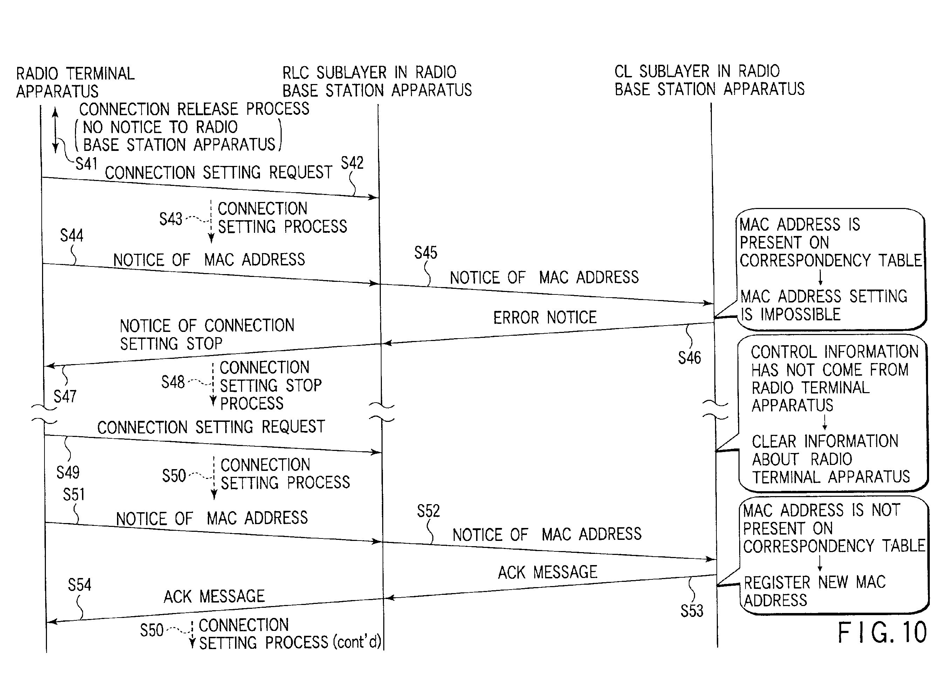

FIG. 8 shows a second example of the sequence of a connection setting in the present embodiment. FIG. 9 shows a second example of the mac-id assignment process in the radio base station apparatus 1 in the embodiment.

In the second example, when the radio base station apparatus 1 has received a connection setting request from the radio terminal apparatus 3, the radio base station apparatus 1 assigns a new mac-id to the MAC address of the request-source radio terminal apparatus 3 and sets the new mac-id. On the other hand, the radio base station apparatus 1 refers to the MAC address/mac-id correspondency table 121 in the CL and checks whether the correspondency between the MAC address of the request-source radio terminal apparatus 3 and the previous mac-id is present in the table 121 (S31). If not (NO in S32), the radio base station apparatus 1 registers the correspondency between the MAC address of the request-source radio terminal apparatus 3 and the newly assigned mac-id in the correspondency table 121 (S34) and carries out the procedure for the connection setting request. If the correspondency between the MAC address of the request-source radio terminal apparatus 3 and the previous mac-id is present in the table 121 (YES in S32), the radio base station apparatus 1 updates the MAC address/mac-id correspondency table 121 with the new mac-id, releases the previous mac-id (S34), and carries out the procedure for the connection setting request.

This example will now be described with reference to FIG. 8.

Assume that the radio terminal apparatus 3 has executed a connection release process for the mac-id = "x", without notice to the radio base station apparatus 1 (S21).

If the radio base station apparatus 1 receives a connection setting request from the radio terminal apparatus 3 before the radio base station apparatus 1 executes a connection release process for the mac-id = "x" (S22), the mac-id management unit 141 of RLC Sublayer processing unit 14 of radio base station apparatus 1 first determines a mac-id value to be assigned to the radio terminal apparatus 3. Assume that a value, mac-id = "y", has been assigned. The radio base station apparatus 1 performs the connection setting process with the radio terminal apparatus 3 using the mac-id = "y" (S23, S24).

If the radio base station apparatus 1 is notified of the MAC address of the radio terminal apparatus 3 from the radio terminal apparatus 3 during the connecting setting process (S25), the RLC Sublayer processing unit 14 of radio base station apparatus 1 informs the CL processing unit 12 of radio base station apparatus 1 of the MAC address (S26). The CL processing unit 12 of radio base station apparatus 1 refers to the MAC address/mac-id correspondency table 121 and checks whether the mac-id value has already been assigned to the MAC address.

In the state shown in FIG. 5, the mac-id = "x" has not yet been released and is still assigned. Thus, the CL processing unit 12 of radio base station apparatus 1 updates its MAC address/mac-id correspondency table 121 so as to change the mac-id value to be assigned to the MAC address from the previous "x" to the newly assigned "y" and instructs the RLC Sublayer processing unit 14 of radio base station apparatus 1 to release the previous mac-id value "x" assigned to the MAC address (S27).

The RLC Sublayer processing unit 14 of radio base station apparatus 1 performs the connection release process for the mac-id = "x", as instructed by the CL processing unit 12 of radio base station apparatus 1, and continues the connection setting process with the radio terminal apparatus 3 using the mac-id = "y" (S28, S24).

On the other hand, when the MAC address/mac-id correspondency table 121 has been checked to find that the mac-id value is not assigned to the MAC address, the CL processing unit 12 of radio base station apparatus 1 registers the correspondency between the MAC address and the newly assigned mac-id value "y" on the MAC address/mac-id correspondency table 121, and delivers an ACK message to the RLC Sublayer processing unit 14 of radio base station apparatus 1 without issuing a release instruction. The RLC Sublayer processing unit 14 of radio base station apparatus 1 continues the connection setting process with the radio terminal apparatus 3 using the mac-id = "y".

In this method, too, the MAC address of the radio terminal apparatus 3 may be included in the connection setting request message from the radio terminal apparatus 3.

### (Third Example)

FIG. 10 shows a third example of the sequence of connection setting in the present embodiment. FIG. 11 shows a third example of the mac-id assignment process in the radio base station apparatus 1 in the embodiment.

In the third example, when the radio base station apparatus 1 has received a connection setting request from the radio terminal apparatus 3, the radio base station apparatus 1 does not immediately perform assignment of the mac-id. The radio base station apparatus 1 first refers to the MAC address/mac-id correspondency table 121 and checks whether there is already the correspondency between the MAC address of the request-source radio terminal apparatus 3 and the mac-id (or there is already the MAC address) on the table 121 (S61). If not (NO in S62), the radio base station apparatus 1 continues the procedure for the connection setting request (S64). If there is the correspondency (YES in S62), the radio base station apparatus 1 performs a procedure for stopping the connection setting (S63).

This example will now be described with reference to FIG. 10.

Assume that the radio terminal apparatus 3 has executed a connection release process for the mac-id = "x", without notice to the radio base station apparatus 1 (S41).

If the radio base station apparatus 1 receives a connection setting request from the radio terminal apparatus 3 before the radio base station apparatus 1 executes a connection release process for the mac-id = "x" (S42), the RLC Sublayer processing unit 14 of radio base station apparatus 1 starts the connection setting process with the radio terminal apparatus 3 (S43).

If the radio base station apparatus 1 is notified of the MAC address of radio terminal apparatus 3 from the radio terminal apparatus 3 during the connecting setting process (S44), the RLC Sublayer processing unit 14 of radio base station apparatus 1 informs the CL processing unit 12 of radio base station apparatus 1 of the MAC address (S45). The CL processing unit 12 refers to the MAC address/mac-id correspondency table 121 and checks whether the mac-id value has already been assigned to the MAC address.

In the state shown in FIG. 5, for example, the mac-id value for the radio terminal apparatus 3 is still held in the radio base station apparatus 1. Thus, the CL processing unit 12 of radio base station apparatus 1 determines that new setting of the MAC address of radio terminal apparatus 3 on the MAC address/mac-id correspondency table 121 is impossible. The CL processing unit 12 issues an error notice to the RLC Sublayer processing unit 14 of radio base station apparatus 1 (S46). The RLC Sublayer processing unit 14 of radio base station apparatus 1, which has received the error notice, informs the radio terminal apparatus 3 that the connection setting process is stopped (S47, S48).

On the other hand, even if the above state remains unchanged with respect to the connection setting request and MAC address notice (S49, S50, S51, S52), the MAC address/mac-id correspondency table 121 will be checked thereafter and it may be found that the correspondency between the MAC address of request-source radio terminal apparatus 3 and the mac-id is not present on the table 121. In this case, the CL processing unit 12 of radio base station apparatus 1 registers this MAC address on the MAC address/mac-id correspondency table 121 and delivers an ACK message to the RLC Sublayer processing unit 14 of radio base station apparatus 1 (S53). The RLC Sublayer processing unit 14 of radio base station apparatus 1 continues the connection setting process (including the assignment of the mac-id in the RLC Sublayer and the registration of the mac-id on the MAC address/mac-id correspondency table) with the radio terminal apparatus 3 (S54, S50).

In the example shown in FIG. 10, once the radio terminal apparatus 3 has executed the connection release process without notice to the radio base station apparatus 1, the connection setting process with the radio terminal apparatus 3 is rejected unless the registration of correspondency between the MAC address of radio terminal apparatus and mac-id is deleted from the MAC address/mac-id correspondency table 121 stored in the CL processing unit 12 of radio base station apparatus 1. In this case, the radio base station apparatus 1 starts the connection release process for the radio terminal apparatus 3 if the radio terminal apparatus 3 does not send the RLC_MT_ALIVE_REQUEST_ACK message in response to the RLC_MT_ALIVE_REQUEST message that is periodically sent from the radio base station apparatus 1. Consequently, the information on the MAC address of radio terminal apparatus 3 is deleted from the MAC address/mac-id correspondency table 121 of radio base station apparatus 1. Thereafter, a connection setting request from the radio terminal apparatus 3 is not rejected, and a connection between the radio base station apparatus 1 and the radio terminal apparatus 3 can be set again.

In this method, too, the MAC address of radio terminal apparatus 3 may be included in the connection setting request message from the radio terminal apparatus 3.

In the above description, it is assumed that the data communication from the radio base station apparatus to the radio terminal apparatus is based on HYPERLAN Type 2. In this case, the data communication from the radio terminal apparatus to the radio base station apparatus may also be based on HYPERLAN Type 2. Alternatively, structures configured to be based on protocols and communication systems different from HYPERLAN Type 2 (e.g. PHS is used for data communication from the radio terminal apparatus to the radio base station apparatus) may be feasible.

In protocols and communication systems such as ARIB STD-T70, similar problems may occur to those of the data communication based on HYPERLAN Type 2 from the radio base station apparatus to the radio terminal apparatus. Such problems can also be solved by the structures described above.

As has been described above, according to the present embodiment, a contradiction relating to temporary identification information (e.g. mac-id), which occurs in the radio base station apparatus due to connection release of the radio terminal apparatus, can be prevented.

## Claims

1. A radio base station apparatus setting a connection in respect to one radio terminal (3) of a plurality of radio terminals each having a first identifier which is assigned in response to a connection setting request from the one radio terminal (3),
the radio base station apparatus **characterized by** comprising:
a storage unit (121) configured to store a table associating the first identifier with a second identifier temporarily assigned to at least the one radio terminal (3);
a connection control unit (12, 14) configured to determine whether or not the second identifier corresponding to the first identifier notified by the one radio terminal (3) remains in the table without being released in response to the connection setting request and to control the connection in accordance with a determination result.

2. The radio base station apparatus according to claim 1, **characterized in that** the connection control unit (12, 14) sets the connection using the second identifier corresponding to the first identifier notified, if said second identifier corresponding to the first identifier notified remains in the table without being released.

3. The radio base station apparatus according to claim 1, **characterized in that** the connection control unit (12, 14) temporarily assigns a new second identifier to the one radio terminal (3) to set the connection using the new second identifier, if the second identifier corresponding to the first identifier notified is absent in the table.

4. The radio base station apparatus according to claim 1, **characterized in that** the connection control unit (12, 14) temporarily assigns a new second identifier to the one radio terminal (3) in response to the connection setting request to set the connection using the new second identifier, and the connection control unit (12, 14) releases the second identifier and updates the table using the new second identifier, if the second identifier corresponding to the first identifier notified remains in the table without being released.

5. The radio station apparatus according to claim 1, **characterized in that** the connection control unit (12, 14) temporarily assigns a new second identifier to the one radio terminal (3) in response to the connection setting request to set the connection using the new second identifier, and updates the table using the new second identifier, if the second identifier is absent in the table.

6. The radio station apparatus according to claim 1, **characterized in that** the connection control unit (12, 14) notifies the one radio terminal (3) in response to the connection setting request of inhibiting a newly setting of a connection related to the connection setting request in response to the connection setting request, if the second identifier corresponding to the first identifier notified remains in the table without being released.

7. The radio station apparatus according to claim 1, **characterized in that** the connection control unit (12, 14) temporarily assigns a new second identifier to the one radio terminal (3) to set the connection using the new second identifier in response to the connection setting request, if the second identifier corresponding to the first identifier notified is absent in the table.

8. The radio station apparatus according to claim 1, **characterized in that** if the connection control unit (12, 14) fails to receive a first request message, which is cyclically sent from the one radio terminal (3), the connection control unit (12, 14) sends a second request message to request sending of the first request message to the one radio terminal (3), and if the connection control unit (12, 14) fails to receive a response to the second request message from the one radio terminal (3) within a predetermined time period after the second request message is sent, the connection control unit (12, 14) releases the connection with respect to the one radio terminal (3).

9. The radio base station apparatus according to claim 1, **characterized in that** the first identifier is a MAC address which is used as a destination address of an Ethernet and fixedly assigned to the plurality of radio terminals.

10. A computer-executable program recorded on a computer-readable medium for setting a connection between a radio base station apparatus and one radio terminal (3) of a plurality of radio terminals each having a first identifier which is assigned in response to a connection setting request from the one radio terminal (3),
the program **characterized by** comprising:
means for instructing a computer to store a table in a storage unit (121), the table associating the first identifier with a second identifier temporarily assigned to at least the one radio terminal (3);
means for instructing the computer to determine whether or not the second identifier corresponding to the first identifier notified by the one radio terminal (3) remains in the table without being released in response to the connection setting request and to control the connection in accordance with a determination result.

11. The program according to claim 10, **characterized in that** the means for instructing the computer to determine includes means for instructing the computer to set the connection using the second identifier corresponding to the first identifier notified, if said second identifier corresponding to the first identifier notified remains in the table without being released.

12. The program according to claim 10, **characterized in that** the means for instructing the computer to determine includes means for instructing the computer to temporarily assign a new second identifier to the one radio terminal (3) to set the connection using the new second identifier, if the second identifier corresponding to the first identifier notified is absent in the table.

13. The program according to claim 10, **characterized in that** the means for instructing the computer to determine includes means for instructing the computer to temporarily assign a new second identifier to the one radio terminal (3) in response to the connection setting request to set the connection using the new second identifier, and means for instructing the computer to release the second identifier and updates the table using the new second identifier, if the second identifier corresponding to the first identifier notified remains in the table without being released.

14. The program according to claim 9, **characterized in that** the means for instructing the computer to determine includes means for instructing the computer to temporarily assign a new second identifier to the one radio terminal (3) in response to the connection setting request to set the connection using the new second identifier, and means for instructing the computer to update the table using the new second identifier, if the second identifier is absent in the table.

15. The program according to claim 10, **characterized in that** the means for instructing the computer to determine includes means for instructing the computer to notify the one radio terminal (3) of inhibiting a newly setting of a connection related to the connection setting request in response to the connection setting request, if the second identifier corresponding to the first identifier notified remains in the table without being released.

16. The program according to claim 10, **characterized in that** the means for instructing the computer to determine includes means for instructing the computer to temporarily assign a new second identifier to the one radio terminal (3) to set the connection using the new second identifier in response to the connection setting request, if the second identifier corresponding to the first identifier notified is absent in the table.

17. The program according to claim 10, **characterized in that** the means for instructing the computer to determine includes means for instructing the computer to send a second request message to request sending of a first request message, which is cyclically sent from the one radio terminal (3), to the one radio terminal (3), if the radio base station apparatus fails to receive the first request message, and means for instructing the computer to release the connection between the radio base station apparatus and the one radio terminal (3), if the radio base station apparatus fails to receive a response to the second request message from the one radio terminal (3) within a predetermined time period after the second request message is sent.

18. The program according to claim 10, **characterized in that** the first identifier is a MAC address which is used as a destination address of an Ethernet and fixedly assigned to the plurality of radio terminals.

19. A method of setting a connection between a radio base station apparatus and one radio terminal (3) of a plurality of radio terminals each having a first identifier which is assigned in response to a connection setting request from the one radio terminal (3),
the method **characterized by** comprising:
storing a table in a storage unit (121), the table associating the first identifier with a second identifier temporarily assigned to at least the one radio terminal (3);
determining whether or not the second identifier corresponding to the first identifier notified by the one radio terminal (3) remains in the table without being released in response to the connection setting request;
controlling the connection in accordance with a determination result.

20. The method according to claim 19, **characterized in that** the determining includes temporarily assigns a new second identifier to the one radio terminal (3) to set the connection using the new second identifier, if the second identifier corresponding to the first identifier notified is absent in the table.

21. A carrier medium carrying computer readable instructions for controlling the computer to carry out the method of any one of claims 19 or 20.
